(19) **Europäisches Patentamt**
**European Patent Office**
**Office européen des brevets**

(11) **EP 2 472 914 B1**

(12) **FASCICULE DE BREVET EUROPEEN**

(45) Date de publication et mention
de la délivrance du brevet:
**08.06.2016 Bulletin 2016/23**

(51) Int Cl.:
***H04W 4/10*** *(2009.01)* ***H04L 29/06*** *(2006.01)*

(21) Numéro de dépôt: **11194268.6**

(22) Date de dépôt: **19.12.2011**

(54) **Système de communication vocale multipoint en mode quasi full-duplex**

System zur Multipoint-Voice-Kommunikation in fast vollständigem Duplexmodus

Multipoint voice-communication system in quasi full-duplex mode

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.12.2010 FR 1061331**

(43) Date de publication de la demande:
**04.07.2012 Bulletin 2012/27**

(73) Titulaire: **Commissariat à l'Énergie Atomique
et aux Énergies Alternatives
75015 Paris (FR)**

(72) Inventeurs:
• **Corbellini, Giorgio
38000 GRENOBLE (FR)**

• **Calvanese Strinati, Emilio
38000 GRENOBLE (FR)**

(74) Mandataire: **Augarde, Eric et al
Brevalex
56 Boulevard de l'Embouchure,
Bât. B
B.P. 27519
31075 Toulouse Cedex 2 (FR)**

(56) Documents cités:
**US-A1- 2007 104 121    US-A1- 2007 105 579
US-A1- 2008 171 567**

**Description**

**DOMAINE TECHNIQUE**

La présente invention concerne de manière générale un système de communication vocale permettant de relier entre eux une pluralité d'utilisateurs.

**ÉTAT DE LA TECHNIQUE ANTÉRIEURE**

Les systèmes de communication vocale pour un groupe d'utilisateurs sont connus dans le monde professionnel ou dans celui du sauvetage. Par exemple le système PMR (acronyme de *Professional Mobile Radio* ou *Private Mobile Radio)* opère autour de 446 MHz et offre des services de type « talkie-walkie ». La bande étroite du système (12,5 kHz) ne permet pas à plus d'un utilisateur de parler à la fois. La communication est du type half-duplex avec une fonction « Push to Talk », le passage du mode réception au mode émission se faisant en appuyant sur un bouton d'un terminal radio.

Une version numérique du système PMR, dénommée DMR *(Digital private Mobile Radio)* est en cours de normalisation. On en trouvera notamment une description dans les documents ETSI TS 102 36 et ETSI TS 102 398 disponibles sous le site www.etsi.org. Ce système utilise également des canaux à bande étroite (12,5 kHz) et permet des communications de type half-duplex.

De manière générale, la plupart des systèmes de communication vocale connus de l'état de la technique utilisent peu de ressources de transmission (par exemple faible bande passante) de sorte qu'une communication full-duplex n'est guère envisageable. En outre, la plupart de ces systèmes ne permettent qu'une communication point à point, autrement dit, en un instant donné, seuls deux utilisateurs du groupe peuvent communiquer entre eux. Enfin, ils présentent l'inconvénient de nécessiter une opération manuelle sur un terminal radio (appuyer sur un bouton) à chaque fois qu'un utilisateur du groupe veut parler à un autre utilisateur. Cette opération manuelle peut être malcommode, dangereuse voire impossible lors de certaines missions de sauvetage.

L'article de A. Chandra et al. intitulé « Wireless medium access control protocols» publié dans IEEE Communications Surveys and Tutorials, 2000, pp. 1-15 décrit un protocole de contrôle d'accès hybride à une ressource dans un système de télécommunication sans fil. Un tel protocole comprend trois phases : une phase de requête, une phase d'allocation et une phase de transmission de données. Dans la phase de requête, les utilisateurs ont un accès aléatoire à la ressource pour requérir un accès à ladite ressource.

L'objet de la présente invention est par conséquent de proposer un système de communication vocale remédiant aux inconvénients précités.

**EXPOSÉ DE L'INVENTION**

La présente invention est définie dans la revendication 1 annexée. Des modes de réalisation sont donnés dans les revendications dépendantes.

lors de laquelle le noeud de contrôle alloue des trames de transmission à tout ou partie de l'ensemble des noeuds utilisateur ayant transmis une requête d'accès à l'étape précédente, chaque trame de transmission étant constituée d'une pluralité d'intervalles de transmission, lesdites trames étant entrelacées dans le temps ;

- une troisième période, dite période de transmission, lors de laquelle chaque noeud utilisateur auquel a été alloué une trame de transmission à l'étape précédente, transmet ledit paquet voix sur la trame de transmission qui lui a été allouée.

La première période peut être divisée en intervalles élémentaires de scrutation, chaque noeud utilisateur disposant de son propre intervalle élémentaire de scrutation et, s'il a un paquet voix à transmettre, envoie sa requête d'accès pendant de cet intervalle.

Avantageusement, les intervalles élémentaires de scrutation sont initialement ordonnancés à partir d'identificateurs MAC des noeuds utilisateur, ledit ordonnancement étant connu du noeud de contrôle et des noeuds utilisateur.

Cet ordonnancement peut faire l'objet d'une permutation à chaque trame temporelle, la loi de permutation étant alors connue du noeud de contrôle et des noeuds utilisateur.

La requête d'accès peut comprendre un degré de priorité d'accès à ladite ressource, qui peut lui-même être fonction du volume de la voix de l'utilisateur.

Chaque noeud utilisateur comprend avantageusement un buffer de transmission et transmet une requête d'accès au sein de son intervalle élémentaire de scrutation si un paquet voix est présent dans ledit buffer.

Alternativement, chaque noeud utilisateur comprend un buffer de transmission et transmet systématiquement une requête d'accès au sein de son intervalle élémentaire de scrutation, le degré de priorité étant nul en absence de paquet voix au sein dudit buffer et étant non nul dans le cas contraire.

Le noeud de contrôle diffuse de préférence à l'ensemble des noeuds utilisateur, pendant la période d'allocation, un message d'allocation indiquant à chaque noeud utilisateur ayant transmis une requête d'accès pendant la période de scrutation précédente, le rang de trame de transmission qui lui a été allouée au sein de la période de transmission.

Selon une première variante, le noeud de contrôle n'alloue de trames de transmission qu'à concurrence d'un nombre prédéterminé de noeuds utilisateur qui ont fait une requête d'accès.

Selon une seconde variante, le noeud de contrôle détermine un nombre maximal, $N_s$, de noeuds utilisateur pouvant faire l'objet d'une allocation de trame de transmission, ledit nombre maximal étant déterminé par le plus grand entier $N_s$ vérifiant :

$$PP + AP + N_{trame}\sum_{i=1}^{N_s} T_{f,i} \leq T_F$$

où $T_F$ est la durée de la trame temporelle, $T_f$ celle de la trame de transmission de l'utilisateur $i$, $PP$ est la durée de la période de scrutation, $AP$ est la durée de la période d'allocation, $N_{trame}$ est le nombre de trames de transmission entrelacées, une trame de transmission entrelacée étant constituée par un entrelacement temporel des trames de transmission des noeuds utilisateur.

Avantageusement, pendant la période de transmission, chaque noeud utilisateur auquel a été allouée une trame de transmission pendant l'étape d'allocation précédente, diffuse son paquet voix à l'ensemble des noeuds utilisateur.

Le noeud de contrôle peut être également un noeud utilisateur.

Préalablement à toute communication, on procède de préférence à une étape d'initialisation comprenant :

- une étape de découverte automatique des noeuds utilisateur par échange de leurs adresses MAC respectives ;
- une étape d'élection d'un noeud de contrôle parmi les noeuds utilisateur ;
- une étape de synchronisation des noeuds utilisateur avec le noeud de contrôle ainsi élu.

Le noeud de contrôle peut associer à chaque adresse MAC d'un noeud utilisateur, un identificateur d'adresse MAC, et diffuser ensuite à l'ensemble des noeuds utilisateur un message contenant l'adresse MAC de chaque noeud utilisateur et l'identificateur d'adresse MAC ainsi associé.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 illustre schématiquement une phase d'initialisation préalable à la mise en oeuvre de la méthode de communication vocale selon un mode de réalisation de l'invention ;
La Fig. 2 illustre schématiquement la méthode de communication vocale selon un mode de réalisation de l'invention ;
La Fig. 3 représente schématiquement la structure d'une trame temporelle utilisée dans le cadre de la présente invention ;
La Fig. 4 illustre schématiquement la mise en oeuvre de ladite méthode par le noeud de contrôle du réseau ;
La Fig. 5 illustre schématiquement la mise en oeuvre de ladite méthode par un noeud utilisateur du réseau ;
La Fig. 6A représente un exemple de structure d'un paquet utilisé dans une première étape de ladite méthode de communication vocale ;
La Fig. 6B représente un exemple de structure d'un paquet utilisé dans une seconde étape de ladite méthode de communication vocale ;
La Fig. 6C représente un exemple de structure d'un paquet utilisé dans une troisième étape de ladite méthode de communication vocale.

## EXPOSÉ DÉTAILLÉ DE MODES DE RÉALISATION PARTICULIERS

Nous considérerons dans la suite un réseau de terminaux radio, encore dénommés ci-après noeuds utilisateur. Le réseau comprend également un noeud chargé de la coordination du réseau, dit noeud de contrôle. Le noeud de contrôle peut être un noeud utilisateur particulier du réseau. Ce sera notamment le cas dans un réseau de type coopératif, où tous les noeuds ont la même structure et où chaque noeud peut être appelé à jouer le rôle de noeud de contrôle.

Alternativement, le noeud de contrôle peut être un noeud dédié, exclusivement chargé de la coordination du réseau. Ce sera notamment le cas dans un réseau de type cellulaire ou le noeud de contrôle sera alors une station de base.

Nous supposerons dans la suinte, à titre d'illustration et sans préjudice de généralisation, que le réseau est de type coopératif et que le noeud de contrôle est également un noeud utilisateur du réseau.

Nous ferons également l'hypothèse que les communications sur le réseau utilisent une bande étroite de transmission et que les utilisateurs accèdent à cette ressource commune par accès multiple à répartition dans le temps ou TDMA *(Time Division Multiple Access)*. En d'autres termes, les ressources de transmission des différents utilisateurs sont des intervalles de transmission ou TTI *(Time Transmission Interval)* pendant lesquels ils peuvent transmettre dans la bande en question.

La mise en oeuvre de la méthode de communication vocale selon l'invention suppose que l'on ait préalablement effectué une initialisation du réseau. Il convient cependant de souligner que cette étape d'initialisation ne fait pas partie de l'invention elle-même.

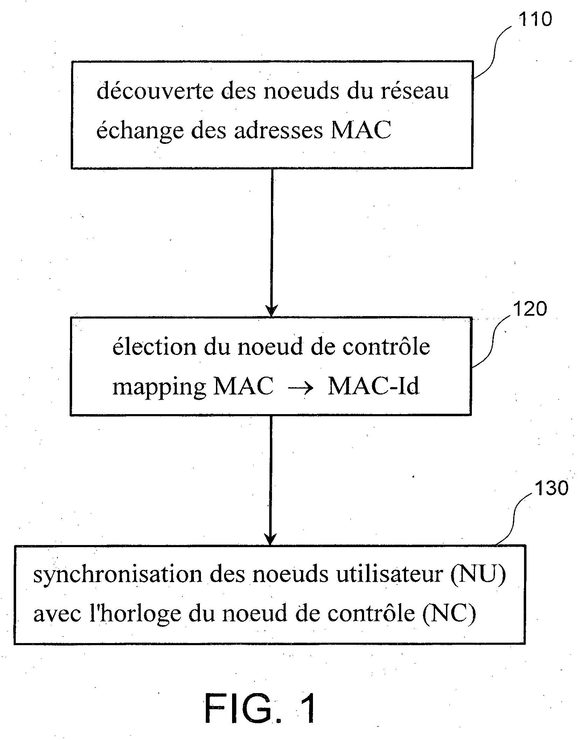

La Fig. 1 illustre ladite étape d'initialisation dans le cas d'un réseau coopératif.

Cette étape d'initialisation peut être lancée lorsque le terminal radio d'un quelconque utilisateur est mis sous tension.

Dans une première phase, 110, on procède à une découverte automatique du réseau par chacun des noeuds. A ce stade, les différents noeuds échangent leurs adresses MAC et, le cas échéant, certaines de leurs caractéristiques. Ces échanges sont réalisés par transmission de paquet en mode asynchrone. En cas de collision, les paquets sont retransmis jusqu'à ce que tous les noeuds se soient mutuellement reconnus.

A l'étape, 120, on procède à l'élection du noeud de contrôle selon une règle prédéterminée. La prise du contrôle par ce noeud donne avantageusement lieu à la diffusion d'un message à l'ensemble des noeuds du réseau indiquant l'identité du noeud de contrôle, typiquement son adresse MAC.

A l'étape 130, on procède à la synchronisation des noeuds utilisateur avec le noeud de contrôle. Pour ce faire, le noeud de contrôle diffuse par exemple un paquet de synchronisation à l'ensemble des noeuds du réseau. Les noeuds utilisateur se synchronisent à l'aide de ce paquet sur l'horloge du noeud de contrôle.

Au terme de l'étape d'initialisation, chaque noeud connaît la taille du réseau (nombre d'utilisateurs) et les adresses MAC des autres noeuds. Pour simplifier les échanges ultérieurs, un identificateur de noeud (noté MAC-Id) codés sur quelques bits (par exemple un quadruplet) est avantageusement associé de manière biunivoque à chaque adresse MAC. Cette association peut être réalisée de manière centralisée par le noeud de contrôle et déclarée aux noeuds utilisateur par un paquet contenant l'adresse MAC du noeud ainsi que son identificateur MAC-Id.

Différentes variantes de l'étape d'initialisation pourront être envisagées par l'homme du métier sans sortir pour autant du cadre de la présente invention. En particulier, on peut concevoir qu'un noeud utilisateur particulier peut être configuré comme noeud de contrôle à partir d'un commutateur de configuration prévu sur le terminal radio. La synchronisation pourra être effectuée en regroupant tous les terminaux en un seul endroit et en déclenchant manuellement cette synchronisation. Dans le cas d'un noeud de contrôle dédié, celui-ci pourra jouer le rôle de station d'accueil (*docking station*), les différents terminaux étant alors connectés à cette station d'accueil et se synchronisant avec elle.

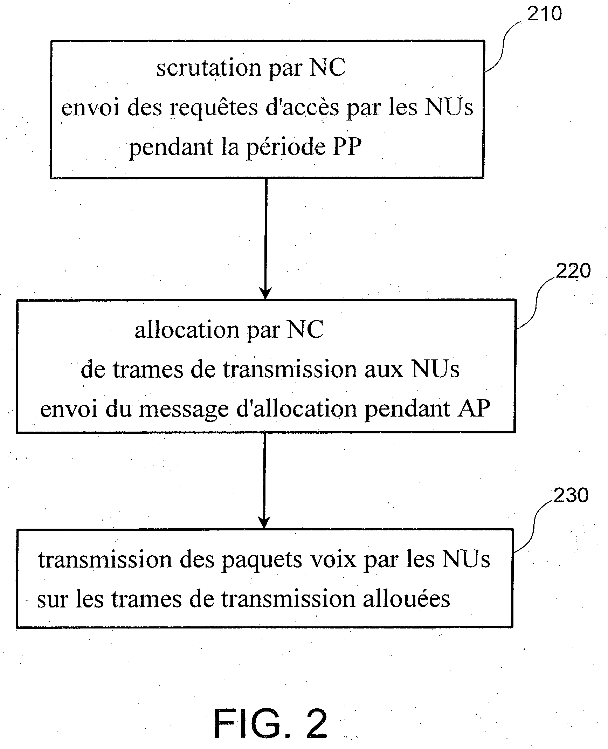

La Fig. 2 représente les principales étapes de la méthode de communication vocale selon un mode de réalisation de l'invention.

L'accès à la ressource commune de transmission est organisé en divisant le temps en trames temporelles consécutives, chaque trame comprenant une première période, dite période de scrutation, une seconde période dite période d'allocation, et une troisième période dite période de transmission.

A l'étape 210, pendant la période de scrutation (Polling Period - PP), le noeud de contrôle reçoit les requêtes d'accès à la ressource de transmission des différents noeuds utilisateur. Plus précisément la période de scrutation est elle-même divisée en intervalles élémentaires, dits intervalles élémentaire de scrutation, chaque noeud utilisateur disposant d'un intervalle propre pour transmettre une requête d'accès à la ressource. L'ordre de ces intervalles au sein de la période de scrutation est connu des noeuds utilisateurs et du noeud de contrôle grâce à une convention prédéterminée. Par exemple, l'ordre des ces intervalles pourra être l'ordre croissant ou décroissant des identificateurs MAC-Id attribués lors de l'étape d'initialisation. Cet ordre pourra toutefois être ensuite modifié par le noeud de contrôle comme expliqué plus loin.

A l'étape 220, le noeud de contrôle effectue une allocation de trames de transmission aux noeuds utilisateur ayant requis un accès à l'étape 210. De manière générale, l'allocation peut ne pas satisfaire les $N_r$ noeuds utilisateur ayant, transmis une requête d'accès, une pluralité $N_s$, avec $N_s \leq N_r$, pouvant être servis. Le nombre $N_s$ peut être fixé ou bien calculé par le noeud de contrôle comme expliqué plus loin.

Une trame de transmission est constituée d'une pluralité d'intervalles de transmission, ces intervalles étant obtenus par division de la période de transmission. Les trames de transmission allouées à différents noeuds utilisateur sont entrelacées.

L'allocation de trames de transmission peut prendre en compte des niveaux de priorité des différents utilisateurs. Après avoir effectué cette allocation, le noeud de contrôle diffuse un message d'allocation à l'ensemble des noeuds utilisateurs pendant la période d'allocation (PA).

A l'étape 230, les noeuds utilisateur auxquels des trames de transmission ont été alloués transmettent leurs paquets voix respectifs au moyen desdites trames pendant la période de transmission (TP).

La méthode de communication vocale se poursuit en retournant à la première étape.

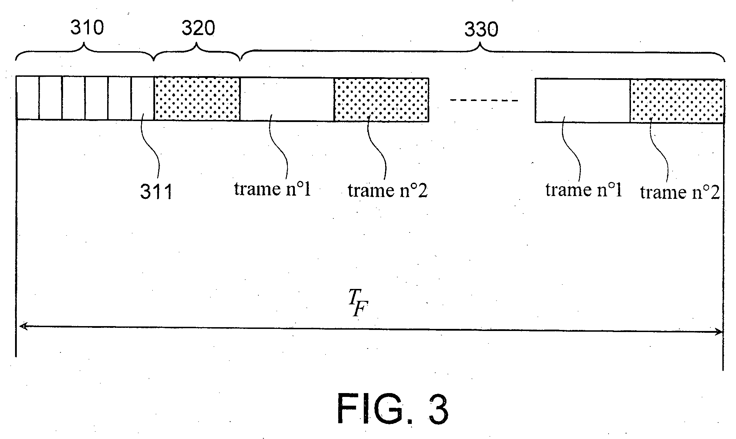

La Fig. 3 représente schématiquement la structure d'une trame temporelle utilisée dans le cadre de la présente invention.

Comme indiqué plus haut, la trame temporelle comprend une période de scrutation (PP), 310, une période d'allocation, 320, et une période de transmission 330.

La période de scrutation, 310, est divisée en autant d'intervalles élémentaires, 311, que de noeuds utilisateur. Pendant l'intervalle élémentaire qui lui est affecté, un noeud utilisateur peut transmettre une requête d'accès au noeud de contrôle.

La période d'allocation (AP), 320, est utilisée par le noeud de contrôle pour diffuser à l'ensemble des noeuds utilisateur un message d'allocation.

La période de transmission (TP), 330, comprend une pluralité $N_{trame}$ de trames de transmission entrelacées, chaque trame étant constituée d'une pluralité $N_s$ d'intervalles de transmission, une pour chaque noeud utilisateur. On a supposé ici que $N_s = 2$, autrement dit que seuls deux utilisateurs étaient autorisés à parler pendant la période de transmission. Les trames sont classées par rang, le rang d'une trame étant le rang du premier intervalle de transmission qui la compose. Ainsi, dans le cas illustré, la première trame est constituée des intervalles de transmission, représentés en clair, de rang impair et la seconde trame est constituée des intervalles de transmission, représentés en grisé, de rang pair.

Bien qu'un seul utilisateur puisse émettre pendant un intervalle de transmission donné, on comprendra que l'entrelacement des trames se traduit par la perception de deux communications half-duplex « simultanées », autrement dit d'une communication full-duplex. Le degré de fragmentation des trames est choisi suffisamment élevé de manière à ce que la restitution de la voix ne présente pas de blancs.

De manière générale, si $T_F$ est la durée totale de la trame temporelle, $T_{f,i}$ la durée du paquet de voix transmis par l'utilisateur i, le nombre maximum $N_s^{max}$ de communications half-duplex « simultanées » est donné par le plus grand entier $N_s$ vérifiant la relation :

$$PP + AP + N_{trame}\sum_{i=1}^{N_s} T_{f,i} \leq T_F \tag{1}$$

Où :

$$T_{f,i} = \frac{\eta_i \cdot k_i \cdot \rho_i}{\gamma_i} + \alpha \tag{2}$$

et où :

$PP$ est la durée de la période de scrutation, $AP$ est la durée de la période d'allocation ; $\eta_i$ est la durée temporelle de chaque intervalle élémentaire de voix, $k_i$ est le nombre d'intervalles élémentaires de voix par utilisateur, $\rho_i$ est le taux de compression de la voix,

$\gamma_i$ est le débit utilisé par le noeud utilisateur $i$, et $\alpha$ est une marge temporelle nécessaire en pratique pour l'émission de chaque paquet voix. Le flux de voix de chaque utilisateur est fragmenté en une pluralité de trames élémentaires et chaque paquet voix transmis pendant un intervalle de transmission contient plusieurs trames élémentaires.

Après démodulation et décodage des paquets voix, la relation suivante doit être satisfaite pour que le signal vocal ne présente pas des blancs lors de la restitution :

$$\eta_i \cdot k_i \cdot N_{trame} \geq T_F \tag{3}$$

La relation (3) signifie qu'après démodulation et décodage des paquets voix, la durée de la restitution du signal vocal de chaque utilisateur ne peut pas être inférieure à la longueur $T_F$ d'une trame temporelle.

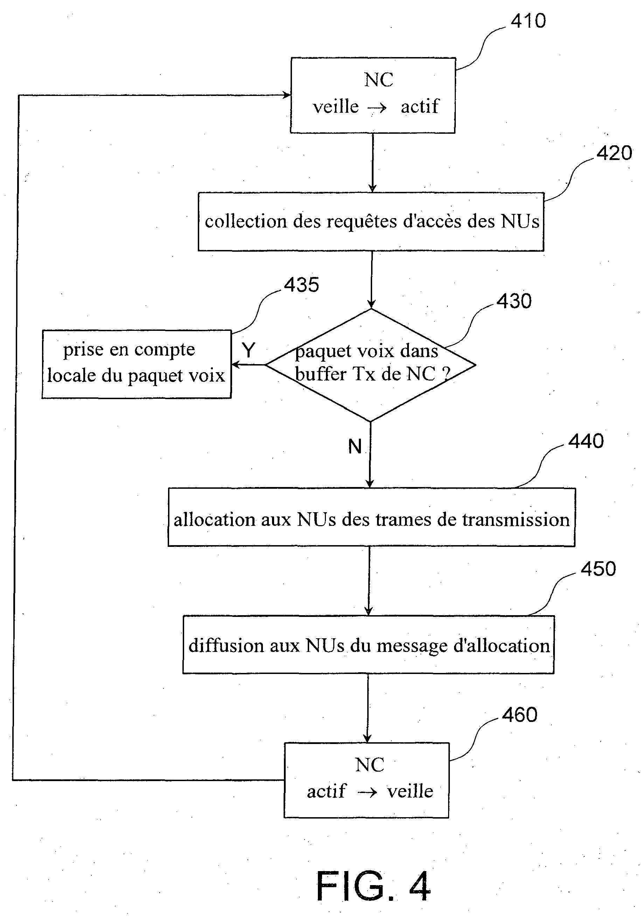

La Fig. 4 illustre la mise en oeuvre de la méthode de communication vocale par le noeud de contrôle.

A l'étape 410, au début de la période de scrutation, le noeud de contrôle passe de l'état de veille à l'état actif.

A l'étape 420, pendant toute la durée de la période de scrutation, le noeud de contrôle collecte les requêtes d'accès transmises par les différents noeuds utilisateur. Ces requêtes peuvent indiquer le degré de priorité de l'accès demandé.

L'étape 430 est optionnelle et concerne le cas où le noeud de contrôle est également un noeud utilisateur, c'est-à-dire un terminal radio de l'un des utilisateurs du réseau. Dans ce cas, le noeud de contrôle vérifie si un paquet voix est présent dans son buffer de transmission. Si c'est le cas, la requête d'accès du noeud de contrôle est prise en compte localement en 435. Si ce n'est pas le cas, aucune requête d'accès n'est générée.

A l'étape 440, le noeud de contrôle procède à l'allocation des trames de transmission. Cette allocation peut tenir compte des degrés de priorité, lorsque ceux-ci sont spécifiés dans les requêtes d'accès. Alternativement ou subsidiairement, l'allocation peut tenir compte d'un degré de priorité implicitement fourni par type de terminal radio (codé dans l'adresse MAC). Lorsqu'une pluralité d'utilisateurs présente le même degré de priorité, l'allocation de trames de transmission se fait de manière aléatoire au sein de ladite pluralité. Au terme de cette étape, les noeuds utilisateur en ayant fait la requête, ou seulement certains d'entre eux (à concurrence de $N_s$) se voient allouer une trame de transmission.

A l'étape 450, le noeud de contrôle diffuse à l'ensemble des noeuds utilisateur un message d'allocation indiquant à chaque noeud utilisateur concerné le rang de la trame de transmission qui lui a été alloué. Plus précisément, ce message contient avantageusement une correspondance entre les identificateurs des noeuds utilisateurs (MAG-Ids) et les rangs des trames de transmission. On comprendra que si le noeud de contrôle est également un noeud utilisateur le message d'allocation ne contient pas l'information d'allocation pour le noeud de contrôle mais que cette information est stockée localement.

A l'étape 460, le noeud de contrôle passe de l'état actif à l'état de veille jusqu'au. début de la période de scrutation suivante. Toutefois, lorsque le noeud de contrôle est également noeud utilisateur, l'état de veille est interrompu pour transmettre son propre paquet voix (ou bien pour recevoir des paquets voix provenant d'autres utilisateurs). Le noeud de contrôle est alors à l'état actif pendant la transmission du paquet et repasse aussitôt après à l'état de veille jusqu'au début de la période de scrutation suivante.

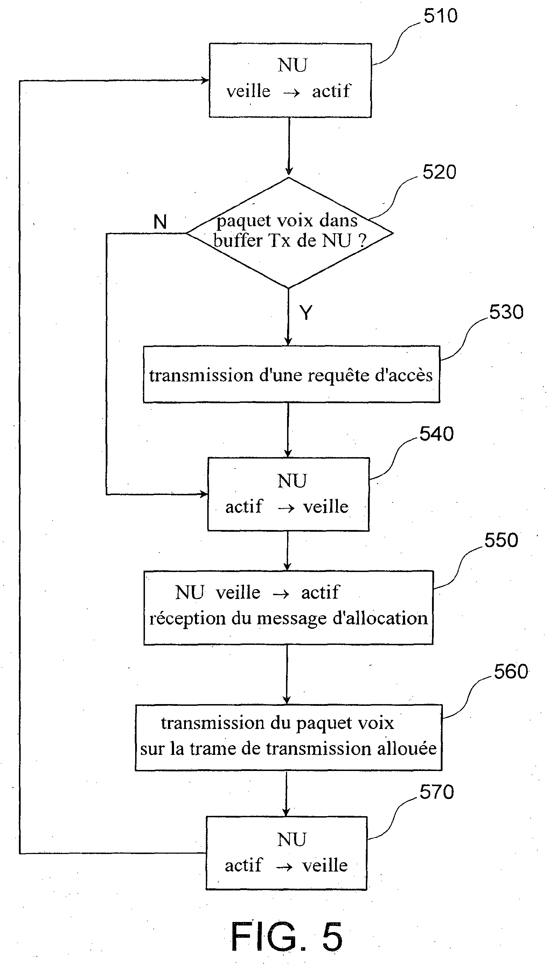

La Fig. 5 illustre la mise en oeuvre de la méthode de communication vocale par un noeud utilisateur (hors noeud de contrôle).

Au début de la période de scrutation, le noeud utilisateur passe de l'état de veille à l'état actif en 510. Il détermine en 520 si un paquet voix est à transmettre, autrement dit si un paquet voix est présent dans son buffer de transmission.

En absence de paquet à transmettre, il retourne à l'état de veille en 540 jusqu'au début de la période d'allocation. En revanche, si un paquet voix est à transmettre, le noeud utilisateur transmet à l'étape 530 sa requête d'accès lors de l'intervalle élémentaire de scrutation qui lui est affecté. Au début de la communication, cette affectation est de préférence une fonction prédéterminée de l'identificateur MAC-Id. Cette affectation peut néanmoins être ensuite modifiée comme expliqué plus loin.

La requête d'accès comprend avantageusement un degré de priorité spécifié par l'utilisateur. Par exemple, le degré de priorité peut être fonction croissante du volume de la voix. Une fois sa requête d'accès transmise, le noeud utilisateur repasse en état de veille en 540, jusqu'au début de la période d'allocation.

En 550, le noeud utilisateur passe de l'état de veille à l'état actif en début de la période d'allocation. Il reçoit le message d'allocation diffusé par le noeud de contrôle. Il détermine à partir de ce message si une trame de transmission lui a été allouée pour la trame temporelle en cours et, dans l'affirmative, le rang de cette trame de transmission.

A l'étape 560, le noeud utilisateur émet son paquet voix pendant la trame de transmission qui lui a été alloué. Plus précisément, il fragmente ce paquet et le transmet pendant les intervalles de transmission constitutifs de la trame en question. Il reçoit simultanément les paquets voix des autres ($N_s$-1) noeuds utilisateur. Au terme de la dernière trame de transmission, le noeud utilisateur passe en mode veille en 570, jusqu'au début de la période de scrutation suivante.

Comme déjà indiqué plus haut, l'affectation, ou plus précisément l'ordonnancement (*scheduling*) initial des intervalles élémentaires de scrutation est effectué de préférence en fonction des identificateurs MAC (MAC-Id). Cet ordonnancement peut être constant pour toute la durée de la communication.

Selon une variante avantageuse de réalisation, l'ordonnancement des intervalles élémentaires de scrutation sera permuté à chaque intervalle de scrutation pour réduire statistiquement les temps de latence des paquets voix.

Un ordonnancement fixe a pour effet de privilégier les noeuds utilisateur auxquels ont été affectés les intervalles de scrutation les plus proches du début de la période d'allocation. Ainsi, un paquet voix qui serait stocké dans le buffer d'émission d'un noeud utilisateur au cours de la période de scrutation sera pris en compte si son intervalle élémentaire de scrutation est le dernier de ladite période alors qu'il ne le sera pas si son intervalle élémentaire de scrutation sera le premier de cette période. Dans ce second cas, la requête d'allocation ne sera pas émise lors de la période de scrutation courante mais seulement lors de la période de scrutation suivante. En d'autres termes, le temps de latence du paquet voix sera augmenté d'au moins la durée $AP + TP$ (durée de la période d'allocation plus durée de la période de transmission), ce qui peut être pénalisant.

La variante de réalisation précitée permute l'ordonnancement des intervalles élémentaires de scrutation. La loi de permutation peut être égalitaire, telle qu'une permutation circulaire à chaque trame temporelle, ou bien privilégier certains noeuds utilisateurs prioritaires.

La loi de permutation est de préférence connue de l'ensemble des noeuds utilisateur. Ainsi, chaque noeud utilisateur connaissant l'ordonnancement initial et la loi de permutation est à même de déterminer, à chaque trame temporelle, l'intervalle élémentaire de scrutation qui lui est affecté. En cas de variation du nombre de noeuds utilisateur, le noeud de contrôle procède à une nouvelle initialisation de l'ordonnancement sur la base des identificateurs MAC (Mac-Id) des noeuds présents dans le réseau.

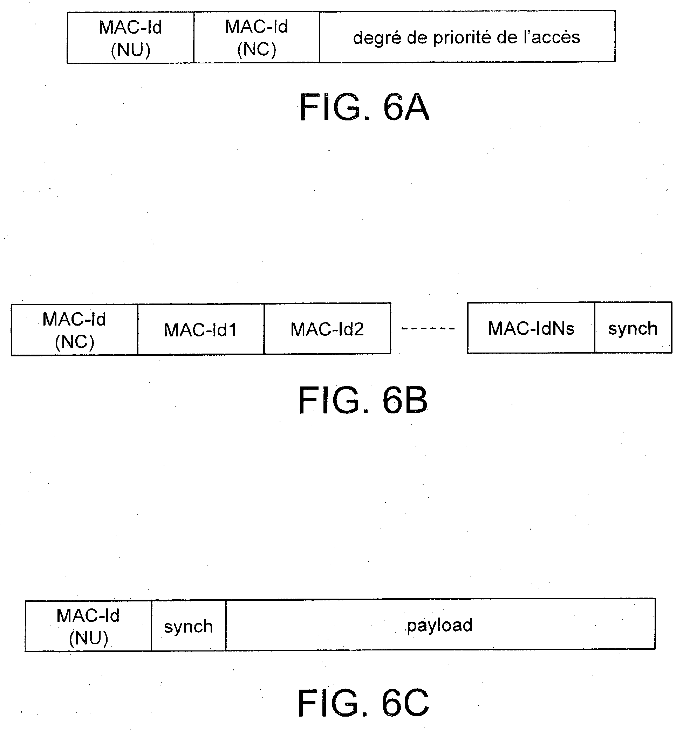

La Fig. 6A représente le format d'un paquet de requête d'accès.

Le paquet comprend une première partie dans laquelle est stocké l'identificateur MAC (MAC-Id) du noeud utilisateur à l'origine de la requête, une seconde partie contenant l'identificateur MAC du noeud de contrôle, destinataire de la requête, et, le cas échéant, une troisième partie contenant le degré de priorité de l'accès.

Selon un exemple particulier de réalisation, tous les noeuds utilisateur, y compris ceux dont le buffer de transmission est vide, émettent une requête d'accès lors d'une période de scrutation. Toutefois, lorsque le buffer de transmission est vide, le degré de priorité est conventionnellement fixé à 0 et la requête n'est pas prise en compte. Ceci permet au noeud de contrôle de faire la distinction entre un paquet de requête d'accès non parvenu à destination (évanouissement du canal de transmission par exemple) et une absence de requête d'un noeud utilisateur.

La Fig. 6B représente le format d'un paquet de message d'allocation.

On rappelle que ce message est transmis par le noeud de contrôle pour signifier aux noeuds utilisateur les trames de transmission qui leur sont allouées.

Le paquet comprend un en-tête contenant l'identificateur MAC du noeud de contrôle, à l'origine du message, une pluralité d'idéntificateurs MAC dont l'ordre indique les rangs des trames de transmission qui leur sont respectivement allouées la première trame est allouée au noeud utilisateur identifié par MAC-Id1, la seconde à celui identifié par MAC-Id2, et ainsi de suite.

Le cas échéant, le paquet peut également contenir une information de synchronisation, indiquant précisément le début de la période de transmission. Par défaut, le début de la période de transmission coïncide avec la fin de la période d'allocation.

La Fig. 6C représente schématiquement le format d'un paquet voix.

Ce paquet comprend un en-tête contenant l'identificateur du noeud utilisateur à l'origine du paquet, ainsi que la charge utile proprement dite. Le cas échéant, comme indiqué sur la figure, le paquet peut comprendre une information de synchronisation indiquant à quel instant le paquet voix a été généré, de manière à en permettre l'alignement temporel lors de sa restitution.

De manière générale, un noeud utilisateur transmet son paquet voix à l'ensemble des noeuds utilisateur du réseau, de sorte que chaque noeud peut restituer l'ensemble des communications en cours. Selon une variante, chaque noeud peut sélectionner le ou les utilisateurs qu'il souhaite écouter. Il suffit alors de filtrer les paquets voix dont les en-têtes contiennent les identificateurs MAC-Id des utilisateurs sélectionnés.

## Revendications

1. Méthode de communication vocale entre une pluralité d'utilisateurs équipés de terminaux radio, dits noeuds utilisateur, **caractérisée en ce que** les noeuds utilisateur accèdent à une ressource de transmission commune, de manière contrôlée par un noeud de contrôle, l'accès à ladite ressource étant organisé en trames temporelles, chaque trame temporelle comprenant:

   - une première période (310), dite période de scrutation, lors de laquelle les noeuds utilisateur ayant un paquet voix à transmettre, envoient (210) une requête d'accès au noeud de contrôle, la première période étant divisée en intervalles élémentaires de scrutation, chaque noeud utilisateur disposant de son propre intervalle élémentaire de scrutation et, s'il a un paquet voix à transmettre, envoyant sa requête d'accès pendant cet intervalle ;
   - une seconde période (320), dite période d'allocation, lors de laquelle le noeud de contrôle alloue (220) des trames de transmission à tout ou partie de l'ensemble des noeuds utilisateur ayant transmis une requête d'accès à l'étape précédente, chaque trame de transmission étant constituée d'une pluralité d'intervalles de transmission, les trames de transmission de deux noeuds utilisateur étant entrelacées dans le temps ;
   - une troisième période (330), dite période de transmission, lors de laquelle chaque noeud utilisateur auquel a été alloué une trame de transmission à l'étape précédente, transmet (230) ledit paquet voix sur la trame de transmission qui lui a été allouée.

2. Méthode de communication vocale selon la revendication 1, **caractérisée en ce que** les intervalles élémentaires de scrutation sont initialement ordonnancés à partir d'identificateurs MAC des noeuds utilisateur, ledit ordonnancement étant connu du noeud de contrôle et des noeuds utilisateur.

3. Méthode de communication vocale selon la revendication 2, **caractérisée en ce que** l'ordonnancement fait l'objet d'une permutation à chaque trame temporelle, la loi de permutation étant connue du noeud de contrôle et des noeuds utilisateur.

4. Méthode de communication vocale selon l'une des revendications précédentes, **caractérisée en ce que** la requête d'accès comprend un degré de priorité d'accès à ladite ressource.

5. Méthode de communication vocale selon la revendication 4, **caractérisée en ce que** le degré de priorité est fonction du volume de la voix de l'utilisateur.

6. Méthode de communication vocale selon l'une des revendications 1 à 5, **caractérisée en ce que** chaque noeud utilisateur comprend un buffer de transmission et transmet une requête d'accès au sein de son intervalle élémentaire de scrutation si un paquet voix est présent dans ledit buffer.

7. Méthode de communication vocale selon les revendications 1 à 5, **caractérisée en ce que** chaque noeud utilisateur comprend un buffer de transmission et transmet systématiquement une requête d'accès au sein de son intervalle élémentaire de scrutation, le degré de priorité étant nul en absence de paquet voix au sein dudit buffer et étant non nul dans le cas contraire.

8. Méthode de communication vocale selon l'une des revendications 1 à 7, **caractérisée en ce que** le noeud de contrôle diffuse à l'ensemble des noeuds utilisateur, pendant la période d'allocation, un message d'allocation indiquant à chaque noeud utilisateur ayant transmis une requête d'accès pendant la période de scrutation précédente, le rang de trame de transmission qui lui a été allouée au sein de la période de transmission.

9. Méthode de communication vocale selon la revendication 8, **caractérisée en ce que** le noeud de contrôle n'alloue de trames de transmission qu'à concurrence d'un nombre prédéterminé de noeuds utilisateur qui ont fait une requête d'accès.

10. Méthode de communication vocale selon la revendication 8, **caractérisée en ce que** le noeud de contrôle détermine un nombre maximal, $N_S$, de noeuds utilisateur pouvant faire l'objet d'une allocation de trame de transmission, ledit nombre maximal étant déterminé par le plus grand entier $N_S$ vérifiant :

$$PP + AP + N_{trame} \sum_{i=1}^{N_s} T_{f,i} \leq T_F$$

où $T_F$ est la durée de la trame temporelle, $T_{f,i}$ celle de la trame de transmission de l'utilisateur i, $PP$ est la durée de la période de scrutation, $AP$ est la durée de la période d'allocation, $N_{trame}$ est le nombre de trames de transmission entrelacées, une trame de transmission entrelacée étant constituée par un entrelacement temporel des trames de transmission des noeuds utilisateur.

11. Méthode de communication vocale selon l'une des revendications précédentes, **caractérisée en ce que**, pendant la période de transmission, chaque noeud utilisateur auquel a été allouée une trame de transmission pendant l'étape d'allocation précédente, diffuse son paquet voix à l'ensemble des noeuds utilisateur.

12. Méthode de communication vocale selon l'une des revendications précédentes, **caractérisée en ce que** le noeud de contrôle est également un noeud utilisateur.

13. Méthode de communication vocale selon l'une des revendications précédentes, **caractérisée en ce que** l'on procède, préalablement à toute communication, à une étape d'initialisation comprenant :

   - une étape (110) de découverte automatique des noeuds utilisateur par échange de leurs adresses MAC respectives ;
   - une étape (120) d'élection d'un noeud de contrôle parmi les noeuds utilisateur ;
   - une étape (130) de synchronisation des noeuds utilisateur avec le noeud de contrôle ainsi élu.

**14.** Méthode de communication vocale selon la revendication 13, **caractérisée en ce que** le noeud de contrôle associe à chaque adresse MAC d'un noeud utilisateur, un identificateur d'adresse MAC, et qu'il diffuse ensuite à l'ensemble des noeuds utilisateur un message contenant l'adresse MAC de chaque noeud utilisateur et l'identificateur d'adresse MAC ainsi associé.

**Patentansprüche**

**1.** Verfahren zur Sprachkommunikation zwischen einer Mehrzahl von Benutzern, die mit Funkterminals ausgestattet sind, genannt Benutzerknoten, **dadurch gekennzeichnet, dass** die Benutzerknoten in einer durch einen Kontrollknoten kontrollierten Weise auf eine gemeinsame Übertragungsressource zugreifen, wobei der Zugriff auf die Ressource in zeitlichen Frames organisiert ist, wobei jedes zeitliche Frame umfasst:

- eine erste Periode (310), genannt Abfrageperiode, während der die Benutzerknoten, die ein Sprachpaket zu übertragen haben, eine Zugriffsanfrage an den Kontrollknoten schicken (210), wobei die erste Periode in elementare Abfrageintervalle unterteilt ist, wobei jeder Benutzerknoten über sein eigenes elementares Abfrageintervall verfügt und, wenn er ein Sprachpaket zu übertragen hat, seine Zugriffsanfrage während dieses Intervalls sendet;
- eine zweite Periode (320), genannt Zuweisungsperiode, während der der Kontrollknoten Übertragungsframes an alle oder einen Teil der Gesamtheit der Benutzerknoten zuweist, die im vorhergehenden Schritt eine Zugriffsanfrage übertragen haben, wobei jedes Übertragungsframe durch eine Mehrzahl von Übertragungsintervallen gebildet ist, wobei die Übertragungsframes von zwei Benutzerknoten zeitlich verschachtelt sind;
- eine dritte Periode (330), genannt Übertragungsperiode, während der jeder Benutzerknoten, dem im vorhergehenden Schritt ein Übertragungsframe zugewiesen worden ist, das Sprachpaket auf dem Übertragungsframe überträgt (230), das ihm zugewiesen worden ist.

**2.** Verfahren zur Sprachkommunikation nach Anspruch 1, **dadurch gekennzeichnet, dass** die elementaren Abfrageintervalle anfänglich ausgehend von MAC-Identifikatoren der Benutzerknoten geordnet werden, wobei die Ordnung dem Kontrollknoten und dem Benutzerknoten bekannt ist.

**3.** Verfahren zur Sprachkommunikation nach Anspruch 2, **dadurch gekennzeichnet, dass** die Ordnung Gegens tand einer Permutation bei jedem zeitlichen Frame ist, wobei das Permutationsgesetz dem Kontrollknoten und dem Benutzerknoten bekannt ist.

**4.** Verfahren zur Sprachkommunikation nach einem der vorhergehenden Ansprüche, **dadurch gekennzeichnet, dass** die Zugriffsanfrage einen Prioritätsgrad des Zugriffs auf die Ressource umfasst.

**5.** Verfahren zur Sprachkommunikation nach Anspruch 4, **dadurch gekennzeichnet, dass** der Prioritätsgrad eine Funktion der Lautstärke der Sprache des Benutzers ist.

**6.** Verfahren zur Sprachkommunikation nach einem der Ansprüche 1 bis 5, **dadurch gekennzeichnet, dass** jeder Benutzerknoten einen Übertragungspuffer umfasst und eine Zugriffsanfrage innerhalb seines elementaren Abfrageintervalls überträgt, wenn in dem Puffer ein Sprachpaket vorhanden ist.

**7.** Verfahren zur Sprachkommunikation nach den Ansprüchen 1 bis 5, **dadurch gekennzeichnet, dass** jeder Benutzerknoten einen Übertragungspuffer umfasst und systematisch eine Zugriffsanfrage innerhalb seines elementaren Abfrageintervalls überträgt, wobei der Prioritätsgrad in Abwesenheit eines Sprachpakets innerhalb des Puffers Null ist und im entgegengesetzten Fall ungleich Null ist.

**8.** Verfahren zur Sprachkommunikation nach einem der Ansprüche 1 bis 7, **dadurch gekennzeichnet, dass** der Kontrollknoten während der Zuweisungsperiode an die Gesamtheit der Benutzerknoten eine Zuweisungsnachricht aussendet, die jedem Benutzerknoten, der während der vorhergehenden Abfrageperiode eine Zugriffsanfrage übertragen hat, den Rang des Übertragungsframes anzeigt, das ihm innerhalb der Übertragungsperiode zugewiesen worden ist.

**9.** Verfahren zur Sprachkommunikation nach Anspruch 8, **dadurch gekennzeichnet, dass** der Kontrollknoten Übertragungsframes nur dann zuweist, wenn eine Konkurrenz zwischen einer vorbestimmten Zahl von Benutzerknoten auftritt, die eine Zugriffsanfrage getätigt haben.

**10.** Verfahren zur Sprachkommunikation nach Anspruch 8, **dadurch gekennzeichnet, dass** der Kontrollknoten eine maximale Anzahl $N_s$ von Benutzerknoten bestimmt, die Gegenstand einer Zuweisung eines Übertragungsframes sein können, wobei die maximale Anzahl bestimmt ist durch die größte ganze Zahl $N_s$, die erfüllt:

$$PP + AP + N_{trame}\sum_{i=1}^{N_s}T_{f,i} \leq T_F$$

wobei $T_F$ die Dauer des zeitlichen Frames ist, $T_{f,i}$ jene des Übertragungsframes des Benutzers $i$, $PP$ die Dauer der Abfrageperiode ist, $AP$ die Dauer der Zuweisungsperiode ist, $N_{trame}$ die Zahl von verschachtelten Übertragungsframes ist, wobei ein verschachteltes Übertragungsframe durch eine zeitliche Verschachtelung der Übertragungsframes der Benutzerknoten gebildet wird.

**11.** Verfahren zur Sprachkommunikation nach einem der vorhergehenden Ansprüche, **dadurch gekennzeichnet, dass** während der Übertragungsperiode jeder Benutzerknoten, dem während des vorhergehenden Zuweisungsschritts ein Übertragungsframe zugewiesen worden ist, sein Sprachpaket an die Gesamtheit der Benutzerknoten aussendet.

**12.** Verfahren zur Sprachkommunikation nach einem der vorhergehenden Ansprüche, **dadurch gekennzeichnet, dass** der Kontrollknoten ebenfalls ein Benutzerknoten ist.

**13.** Verfahren zur Sprachkommunikation nach einem der vorhergehenden Ansprüche, **dadurch gekennzeichnet, dass** man vor jeder Kommunikation einen Initialisierungsschritt durchführt, umfassend:

- einen Schritt (110) zur automatischen Entdeckung der Benutzerknoten durch Austausch ihrerjeweiligen MAC-Adressen;
- einen Schritt (120) zur Auswahl eines Kontrollknotens aus den Benutzerknoten;
- einen Schritt (130) zur Synchronisation der Benutzerknoten mit dem derart ausgewählten Kontrollknoten.

**14.** Verfahren zur Sprachkommunikation nach Anspruch 13, **dadurch gekennzeichnet, dass** der Kontrollknoten jeder MAC-Adresse eines Benutzerknotens einen MAC-Adressidentifikator zuordnet, und dass er anschließend an die Gesamtheit der Benutzerknoten eine Nachricht aussendet, die die MAC-Adresse jedes Benutzerknotens und den derart zugeordneten MAC-Adressidentifikator enthält.

**Claims**

**1.** Voice communication method between a plurality of users equipped with radio terminals, referred to as user nodes, **characterised in that** the user nodes access a common transmission resource, controlled by a control node, the access to said resource being organised in time frames, each time frame comprising:

- a first period (310), referred to as the polling period, during which the user nodes having a voice packet to transmit send (210) the control node an access request, the first period is divided into basic polling intervals, each user node having a specific basic polling interval and, if said node has a voice packet to transmit, sends the access request thereof during said interval ;
- a second period (320), referred to as the allocation period, during which the control node allocates (220) transmission frames to all or part of the set of user nodes having transmitted an access request in the previous step, each transmission frame allocated to a user being fragmented into a plurality of transmission intervals, the transmission frames of two user nodes being interleaved in time ;
- a third period (330), referred to as the transmission period, during which each user node allocated a transmission frame in the previous step, transmits (230) said voice packet in the allocated transmission frame thereof.

**2.** Voice communication method according to claim 1, **characterised in that** the basic polling intervals are initially scheduled using MAC IDs of the user nodes, said scheduling being known to the control node and the user nodes.

**3.** Voice communication method according to claim 2, **characterised in that** the scheduling is the subject of a permutation at each time frame, the permutation law being known to the control node and the user nodes.

**4.** Voice communication method according to any of the above claims, **characterised in that** the access request comprises a degree of priority of access to said resource.

5. Voice communication method according to claim 4, **characterised in that** the degree of priority is dependent on the user voice volume.

6. Voice communication method according to any of claims 1 to 5, **characterised in that** each user node comprises a transmission buffer and transmits an access request in the basic polling interval thereof if a voice packet is present in said buffer.

7. Voice communication method according to claims 1 to 5, **characterised in that** each user node comprises a transmission buffer and systematically transmits an access request in the basic polling interval thereof, the degree of priority being null in the absence of a voice packet in said buffer and being non-null otherwise.

8. Voice communication method according to any of claims 1 to 7, **characterised in that** the control node broadcasts to all the user nodes, during the allocation period, an allocation message specifying to each user node having transmitted an access request during the previous polling period, the transmission frame rank allocated in the transmission period.

9. Voice communication method according to claim 8, **characterised in that** the control node only allocates transmission frames at a rate of a predetermined number of user nodes having made an access request.

10. Voice communication method according to claim 8, **characterised in that** the control node determines a maximum number, $N_S$, of user nodes suitable for transmission frame allocation, said maximum number being determined by the largest integer $N_S$ verifying:

$$PP + AP + N_{frame} \sum_{i=1}^{N_s} T_{f,i} \leq T_F$$

where $T_F$ is the duration of the time frame, $T_{f,i}$ that of the transmission frame of the user i, PP is the duration of the polling period, AP is the duration of the allocation period, $N_{frame}$ is the number of interleaved transmission frames, an interleaved transmission frame consisting of a time-based interleaving of the user node transmission frames.

11. Voice communication method according to any of the above claims, **characterised in that**, during the transmission period, each user node which has been allocated a transmission frame during the previous allocation step, broadcasts the voice packet thereof to all the user nodes.

12. Voice communication method according to any of the above claims, **characterised in that** the control node is also a user node.

13. Voice communication method according to any of the above claims, **characterised in that** prior to any communication, an initialisation step is preferably performed comprising:

- a step (110) for automatically detecting user nodes by exchanging the respective MAC addresses thereof;
- a step (120) for electing a control node from the user nodes;
- a step (130) for synchronising the user nodes with the thus elected control node.

14. Voice communication method according to claim 13, **characterised in that** the control node associates, with each user node MAC address, a MAC address ID, and then broadcasts to all the user nodes a message containing the MAC address of each user node and the associated MAC address ID.

découverte des noeuds du réseau
échange des adresses MAC

110

élection du noeud de contrôle
mapping MAC → MAC-Id

120

synchronisation des noeuds utilisateur (NU)
avec l'horloge du noeud de contrôle (NC)

130

# FIG. 1

210

scrutation par NC

envoi des requêtes d'accès par les NUs

pendant la période PP

220

allocation par NC

de trames de transmission aux NUs

envoi du message d'allocation pendant AP

230

transmission des paquets voix par les NUs

sur les trames de transmission allouées

# FIG. 2

FIG. 3

$T_F$

330

320

310

311

trame n°1   trame n°2

trame n°1   trame n°2

NC
veille → actif
410

collection des requêtes d'accès des NUs
420

prise en compte
locale du paquet voix
435

paquet voix dans
buffer Tx de NC ?
430

Y

N

allocation aux NUs des trames de transmission
440

diffusion aux NUs du message d'allocation
450

NC
actif → veille
460

# FIG. 4

## FIG. 5

NU
veille → actif  ⟵ 510

paquet voix dans buffer Tx de NU ?  ⟵ 520

N

Y

transmission d'une requête d'accès  ⟵ 530

NU
actif → veille  ⟵ 540

NU veille → actif
réception du message d'allocation  ⟵ 550

transmission du paquet voix
sur la trame de transmission allouée  ⟵ 560

NU
actif → veille  ⟵ 570

| MAC-Id (NU) | MAC-Id (NC) | degré de priorité de l'accès |
|---|---|---|

## FIG. 6A

| MAC-Id (NC) | MAC-Id1 | MAC-Id2 | - - - - - - | MAC-IdNs | synch |
|---|---|---|---|---|---|

## FIG. 6B

| MAC-Id (NU) | synch | payload |
|---|---|---|

## FIG. 6C

**EP 2 472 914 B1**

**RÉFÉRENCES CITÉES DANS LA DESCRIPTION**

**Littérature non-brevet citée dans la description**

- **A. CHANDRA et al.** Wireless medium access control protocols. *IEEE Communications Surveys and Tutorials,* 2000, 1-15